# EUROPÄISCHE PATENTSCHRIFT

(11) **EP 2 927 063 B1**
(45) Veröffentlichungstag und Bekanntmachung des Hinweises auf die Patenterteilung: **07.06.2017**
(21) Anmeldenummer: 15159155.9
(22) Anmeldetag: 16.03.2015
(51) Int. Cl.: B60T 7/04, B60K 23/02, B60T 8/40, B60T 11/18

(54) **PEDALKRAFTSIMULATIONSVORRICHTUNG**
PEDAL FORCE SIMULATING DEVICE
DISPOSITIF DE SIMULATION DE FORCE DE PÉDALAGE

(30) Priorität: 03.04.2014 DE 102014206396
(43) Veröffentlichungstag der Anmeldung: 07.10.2015
(73) Patentinhaber: Schaeffler Technologies AG & Co. KG, 91074 Herzogenaurach (DE)
(72) Erfinder: Griesmar, Pierre, 67730 Chatenois (FR); Baßler, Manuel, 77855 Achern (DE)

(56) Entgegenhaltungen:
- DE-A1-102004 023 852
- US-A1- 2003 160 504

## Beschreibung

Die Erfindung betrifft eine Pedalkraftsimulationsvorrichtung, insbesondere für die Simulation von Pedalkräften von Pedalen von Kraftfahrzeugen oder für Simulatoren, in welchen eine Pedalkraftsimulationsvorrichtung beispielsweise am Kupplungspedal eingesetzt wird.

In Kraftfahrzeugen werden Aggregate, wie beispielsweise Kupplungen, Bremsen etc. mittels Pedalen fußbetätigt. Hierzu wird das Pedal beispielsweise an einem Pedalbock schwenkbar angelenkt, wobei durch die Betätigung des Pedals beispielsweise über einen Bowdenzug, eine hydraulische Strecke oder ähnliches das Aggregat betätigt wird. Dabei wirkt auf das Pedal eine typische Rückstellkraft, die dem Bediener das Betätigen erleichtert.

Auch sind Betätigungssysteme bekannt, bei welchen zwischen dem Pedal und dem Aggregat keine direkte mechanische Verbindung mehr vorgesehen ist, sondern an dem Pedal ein Sensor vorgesehen ist, welcher die Betätigung des Pedals erkennt und entsprechend ein Aktuator die Betätigung des Aggregats vornimmt. Solche Vorrichtungen werden bei der Betätigung einer Kupplung beispielsweise "clutch-by-wire" genannt. Auch sind solche Vorrichtung beispielsweise für das Bremspedal oder das Gaspedal bekannt.

Dabei ist es für den Bediener von Nachteil, dass die auf das Pedal wirkende Rückstellkraft nicht mehr originär von dem Aggregat resultiert, weil dadurch die vom Bediener erwartete Rückstellkraft nicht mehr vorliegt und die Betätigung durch den Bediener ungewohnt erscheint. Daher sind Pedalkraftsimulationsvorrichtungen bekannt geworden, welche an dem Pedal angreifen und eine mehr realistische oder gewohnte Rückstellkraft verursachen sollen.

Solche Pedalkraftsimulationsvorrichtungen sind beispielsweise durch die DE 10 2008 061 569 A1, die DE 10 2008 041 349 A1, DE 10 2004 023 852 oder die DE 103 60 784 B4 bekannt geworden.

Die ältere Anmeldung der Anmelderin DE 10 2013 226 307 offenbart eine Pedalkraftsimulationsvorrichtung mit einem entgegen der Rückstellkraft eines Kraftspeichers verlagerbaren Eingangselement, wobei weiterhin ein Element mit einer variablen Kontur vorgesehen ist, an welchem sich vorgespannte Arme abstützen und eine Zusatzkraft auf das Eingangselement ausüben. Dabei zeigt sich, dass aufgrund der Reibung zwischen dem Element mit der variablen Kontur und den Armen ein Verschleiß auftritt, welcher die Zusatzkraft über die Lebensdauer der Vorrichtung beeinflusst.

Die bekannten Pedalkraftsimulationsvorrichtungen sind relativ kompliziert aufgebaut und weisen bei Verschleiß eine veränderte Kennlinie auf, was sich als nachteilig zeigt.

Es ist die Aufgabe der Erfindung, eine Pedalkraftsimulationsvorrichtung zu schaffen, welche auch nach langer Betriebszeit der Vorrichtung eine realistische Rückstellkraft bewirkt.

Die Aufgabe der Erfindung wird mit den Merkmalen von Anspruch 1 gelöst.

Ein Ausführungsbeispiel der Erfindung betrifft eine Pedalkraftsimulationsvorrichtung mit einem entgegen der Rückstellkraft eines Kraftspeichers verlagerbaren Eingangselement, mit einem Element mit variabler Kontur, wobei das Element mit dem Eingangselement verbunden ist, wobei sich an der variablen Kontur sich Arme abstützen, um eine Zusatzkraft auf das Eingangselement auszuüben, wobei das Element mit variabler Kontur eine Verschleißnachstellvorrichtung aufweist, welche bei Verschleiß die Außenkontur des Elements mit variabler Kontur in Richtung auf die Arme hin verstellt. Dadurch wird die Kraftwirkung auf die Kontur und damit auf das Eingangselement über die Lebensdauer im Wesentlichen stabil gehalten.

Besonders vorteilhaft ist es, wenn das Element einen keilförmigen Spalt zwischen zwei Armen aufweist, wobei die variable Kontur an der Außenseite der Arme angeordnet ist, und ein keilförmiges Element vorgesehen ist, welches in dem keilförmigen Spalt zumindest teilweise angeordnet ist, wobei ein weiterer Kraftspeicher vorgesehen ist, welcher das keilförmige Element in den keilförmigen Spalt beaufschlagt. Dadurch wird bei Verschleiß das keilförmige Element in den keilförmigen Spalt gedrängt und gleicht somit den Verschleiß aus.

Auch ist es vorteilhaft, wenn das Element an seinem keilförmigen Spalt eine rastenartige oder treppenartige Oberfläche aufweist, während das keilförmige Element ebenfalls eine rastenartige oder treppenartige Oberfläche aufweist, wobei die Rasten oder Stufen der beiden Oberflächen miteinander zusammenwirken. Dadurch wird nur eine schrittweise Verschleißnachstellung erzielt, so dass der Verschleiß nur dann nachgestellt wird, wenn eine Stufe übersprungen werden kann.

Dabei ist es auch vorteilhaft, wenn das Element eine zentrale Bohrung aufweist, in welcher der zweite Kraftspeicher angeordnet ist, wobei der Kraftspeicher einerseits an dem Element angelenkt ist und andererseits an dem keilförmigen Element. So kann der Kraftspeicher bauraumsparend angeordnet werden.

Auch ist es vorteilhaft, wenn das Element mit dem Eingangselement derart verbunden ist, dass der zweite Kraftspeicher an dem Eingangselement angelenkt ist.

Dabei ist es auch vorteilhaft, wenn der zweite Kraftspeicher mittels eines Halteelements an dem Eingangselement angelenkt ist, welches in eine endseitige Schlinge des Kraftspeichers eingreift. So kann eine einfache Befestigung erreicht werden.

Auch ist es vorteilhaft, wenn der zweite Kraftspeicher an dem keilförmigen Element mittels einer endseitigen Schlinge des Kraftspeichers an einer Öse des keilförmigen Elements angelenkt ist.

Vorteilhaft für eine bauraumsparende Bauweise ist es, wenn ein Gehäuse vorgesehen ist, in welchem das Eingangselement verlagerbar angeordnet ist, wobei der Kraftspeicher sich einerseits an dem Eingangselement und andererseits an dem Gehäuse abstützt.

Die vorliegende Erfindung wird nachfolgend anhand bevorzugter Ausführungsbeispiele in Verbindung mit den zugehörigen Figuren näher erläutert:
Dabei zeigen:
   - Figur 1: eine schematische Ansicht einer Pedalkraftsimulationsvorrichtung nach dem Stand der Technik,
   - Figur 2: eine Verschleißnachstellvorrichtung in perspektivischer Ansicht,
   - Figur 3: eine Verschleißnachstellvorrichtung in einer ersten Betriebsposition, und
   - Figur 4: eine Verschleißnachstellvorrichtung in einer zweiten Betriebsposition.

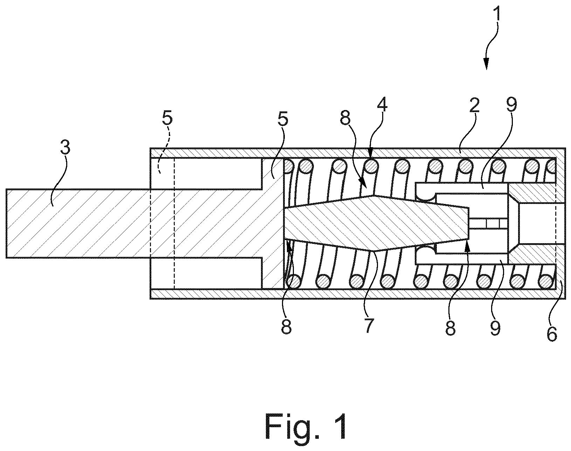

Die Figur 1 zeigt eine Pedalkraftsimulationsvorrichtung 1 nach dem Stand der Technik, mit einem Gehäuse 2 und mit einem in dem Gehäuse 2 verlagerbar angeordneten Eingangselement 3. Das Eingangselement 3 ist entgegen der Rückstellkraft eines Kraftspeichers verlagerbar, wobei der Kraftspeicher 4 sich an einem Teller 5 des Eingangselements 3 und an einer Wand 6 des Gehäuses abstützt. Der Kraftspeicher 4 ist beispielsweise als Druckfeder ausgebildet.

An dem Eingangselement 3 ist ein Element 7 mit variabler Kontur 8 angeordnet und an diesem bevorzugt befestigt oder mit diesem einteilig ausgebildet. Das Element 7 mit variabler Kontur 8 weist eine Kontur 8 auf, die sich über die axiale Länge des Elements 7 verändert. Im Ausführungsbeispiel der Figur 1 ist die Breite des Elements 7 in der Mitte an größten ist, wobei die Breite jeweils zum Ende hin abnimmt.

An der Kontur 8 stützen sich zwei Arme 9 ab, welche eine Kraft auf das Element 7 aufgrund der Kontur 8 ausübt, die von dem Winkel zwischen dem Arm und der Kontur 8 im Berührpunkt resultiert. Aufgrund der Abstützung der Arme 9 an der variablen Kontur 8 wird eine Zusatzkraft erzeugt, die auf das Eingangselement wirkt, um die Kraft des Kraftspeichers zu modulieren.

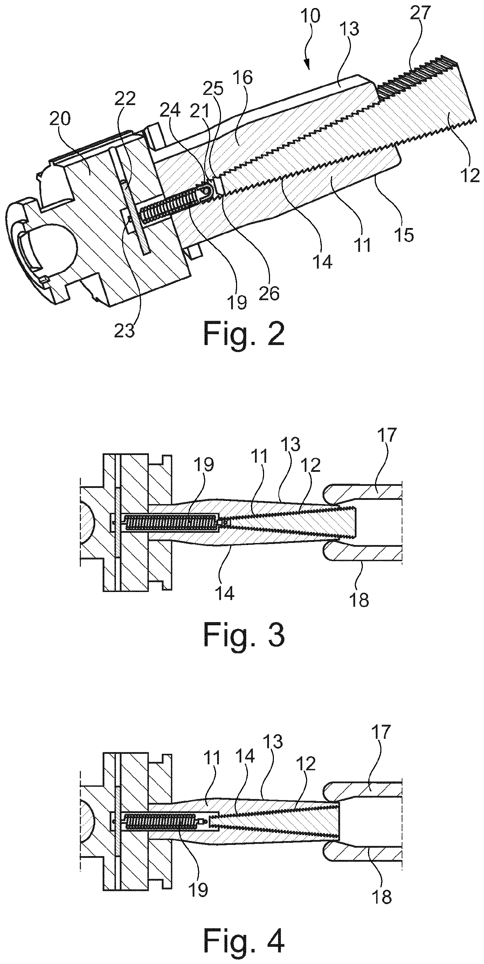

Die Figur 2 zeigt eine Verschleißnachstellvorrichtung 10, welche in eine Pedalkraftsimulationsvorrichtung gemäß Figur 1 integrierbar ist.

Die Verschleißnachstellvorrichtung 10 ist in das Element 11 mit variabler Kontur 13 integriert. Dazu weist das Element 11 einen keilförmigen Spalt 14 zwischen zwei Armen 15, 16 auf, in welchen ein keilförmiges Element 12 eingreift. Je nach eingreifen des keilförmigen Elements können die Arme 15, 16 nach außen gedrängt werden, wodurch bei Verschleiß die Außenkontur 13 des Elements 11 mit variabler Kontur 3 in Richtung auf die Arme 17, 18 hin verstellt werden kann. Die Arme 17, 18 sind in Figur 2 nicht dargestellt, jedoch in den Figuren 3 und 4 bzw. sie entsprechen den Armen 9 der Figur 1.

In Figur 2 ist zu erkennen, dass das keilförmige Element 12 mittels eines zweiten Kraftspeichers 19 in Richtung auf das Eingangselement 20 in den keilförmigen Spalt beaufschlagt wird.

Dazu weist das Element 11 eine zentrale Bohrung 21 auf, in welcher der zweite Kraftspeicher 19 angeordnet ist, wobei der Kraftspeicher 19 einerseits an dem Element 11 angelenkt ist und andererseits an dem keilförmigen Element 12. Dabei ist das Element 11 mit dem Eingangselement 20 derart verbunden, dass der zweite Kraftspeicher 19 an dem Eingangselement 20 selbst angelenkt ist. Dabei ist der zweite Kraftspeicher 19 mittels eines Halteelements 22 an dem Eingangselement 20 angelenkt ist, welches in eine endseitige Schlinge 23 des Kraftspeichers 19 eingreift. Dabei ist auch der zweite Kraftspeicher 19 an dem keilförmigen Element 12 mittels einer endseitigen Schlinge 24 des Kraftspeichers 19 an einer Öse 25 des keilförmigen Elements 12 angelenkt.

Das Element 11 weist an seinem keilförmigen Spalt 14 eine rastenartige oder treppenartige Oberfläche 26 auf, wobei auch das keilförmige Element 12 eine rastenartige oder treppenartige Oberfläche 27 aufweist, wobei die Rasten oder Stufen der beiden Oberflächen miteinander zusammenwirken. Dadurch wird erreicht, dass ein stufenweises Einführen des keilförmigen Elements in den keilförmigen Spalt vorgenommen wird, wenn die Arme 15, 16 des Elements 11 aufgrund von Verschleiß dies erlauben.

Die Figuren 3 und 4 zeigen die Verschleißnachstellvorrichtung in unterschiedlichen Betriebsstellungen. In Figur 3 ist das keilförmige Element 12 nur wenig in den keilförmigen Spalt 14 eingeführt. Dies ist eine Stellung mit noch geringem Verschleiß. Dabei liegen die Arme 17, 18 an der Kontur 13 an und beaufschlagen diese. In Figur 4 ist das keilförmige Element 12 weiter in den keilförmigen Spalt 14 mittels des Kraftspeichers 19 eingeführt. Dies ist eine Stellung mit stärkerem Verschleiß. Dabei liegen die Arme 17, 18 an der Kontur 13 an und beaufschlagen diese.

### Bezugszeichenliste

- 1: Pedalkraftsimulationsvorrichtung
- 2: Gehäuse
- 3: Eingangselement
- 4: Kraftspeicher
- 5: Teller
- 6: Wand
- 7: Element
- 8: Kontur
- 9: Arm
- 10: Verschleißnachstellvorrichtung
- 11: Element
- 12: keilförmiges Element
- 13: Kontur
- 14: Spalt
- 15: Arm
- 16: Arm
- 17: Arm
- 18: Arm
- 19: Kraftspeicher
- 20: Eingangselement
- 21: Bohrung
- 22: Halteelement
- 23: Schlinge
- 24: Schlinge
- 25: Öse
- 26: Oberfläche
- 27: Oberfläche

## Patentansprüche

1. Pedalkraftsimulationsvorrichtung (1) mit einem entgegen der Rückstellkraft eines Kraftspeichers (4) verlagerbaren Eingangselement (3, 20), mit einem Element (7, 11) mit variabler Kontur (8, 13), wobei das Element (7, 11) mit dem Eingangselement (3, 20) verbunden ist, wobei sich an der variablen Kontur (8, 13) sich Arme (9, 17, 18) abstützen, um eine Zusatzkraft auf das Eingangselement (3, 20) auszuüben, **dadurch gekennzeichnet, dass** das Element mit variabler Kontur eine Verschleißnachstellvorrichtung (10) aufweist, welche bei Verschleiß die Außenkontur des Elements (13) mit variabler Kontur in Richtung auf die Arme hin verstellt.

2. Pedalkraftsimulationsvorrichtung nach Anspruch 1, **dadurch gekennzeichnet, dass** das Element (11) einen keilförmigen Spalt (14) zwischen zwei Armen (15,16) aufweist, wobei die variable Kontur (13) an der Außenseite der Arme (15,16) angeordnet ist, und ein keilförmiges Element (12) vorgesehen ist, welches in dem keilförmigen Spalt (14) zumindest teilweise angeordnet ist, wobei ein weiterer Kraftspeicher (19) vorgesehen ist, welcher das keilförmige Element (12) in den keilförmigen Spalt (14) beaufschlagt.

3. Pedalkraftsimulationsvorrichtung nach Anspruch 2, **dadurch gekennzeichnet, dass** das Element (11) an seinem keilförmigen Spalt (14) eine rastenartige oder treppenartige Oberfläche (26) aufweist, während das keilförmige Element (12) ebenfalls eine rastenartige oder treppenartige Oberfläche (27) aufweist, wobei die Rasten oder Stufen der beiden Oberflächen miteinander zusammenwirken.

4. Pedalkraftsimulationsvorrichtung nach Anspruch 2 oder 3, **dadurch gekennzeichnet, dass** das Element (11) eine zentrale Bohrung (26) aufweist, in welcher der weitere Kraftspeicher (19) angeordnet ist, wobei der Kraftspeicher einerseits an dem Element (11) angelenkt ist und andererseits an dem keilförmigen Element.

5. Pedalkraftsimulationsvorrichtung nach einem der vorhergehenden Ansprüche, **dadurch gekennzeichnet, dass** das Element (11) mit dem Eingangselement (20) derart verbunden ist, dass der zweite Kraftspeicher an dem Eingangselement angelenkt ist.

6. Pedalkraftsimulationsvorrichtung nach einem der vorhergehenden Ansprüche, 2 bis 5 **dadurch gekennzeichnet, dass** der weitere Kraftspeicher (19) mittels eines Halteelements an dem Eingangselement angelenkt ist, welches in eine endseitige Schlinge des Kraftspeichers eingreift.

7. Pedalkraftsimulationsvorrichtung nach einem der vorhergehenden Ansprüche 2 bis 6, **dadurch gekennzeichnet, dass** der weitere Kraftspeicher (19) an dem keilförmigen Element mittels einer endseitigen Schlinge des Kraftspeichers an einer Öse des keilförmigen Elements angelenkt ist.

8. Pedalkraftsimulationsvorrichtung nach einem der vorhergehenden Ansprüche, **dadurch gekennzeichnet, dass** ein Gehäuse (2) vorgesehen ist, in welchem das Eingangselement verlagerbar angeordnet ist, wobei der Kraftspeicher sich einerseits an dem Eingangselement und andererseits an dem Gehäuse abstützt.

9. Pedalkraftsimulationsvorrichtung nach einem der vorhergehenden Ansprüche, **dadurch gekennzeichnet, dass** die Arme (9, 17,18), welche sich an dem Element mit der variablen Kontur abstützen von dem Gehäuse (2) abragen.

## Claims

1. Pedal force simulation device (1) with an input element (3, 20) which can be displaced counter to the restoring force of an energy accumulator (4), and with an element (7, 11) with variable contour (8, 13), wherein the element (7, 11) is connected to the input element (3, 20), wherein arms (9, 17, 18) are supported on the variable contour (8, 13) in order to exert an additional force on the input element (3, 20), **characterized in that** the element with variable contour has a wear adjustment device (10) which, during wear, adjusts the outer contour of the element (13) with variable contour in the direction of the arms.

2. Pedal force simulation device according to Claim 1, **characterized in that** the element (11) has a wedge-shaped gap (14) between two arms (15, 16), wherein the variable contour (13) is arranged on the outside of the arms (15, 16), and a wedge-shaped element (12) is provided which is at least partially arranged in the wedge-shaped gap (14), wherein a further energy accumulator (19) is provided which acts on the wedge-shaped element (12) in the wedge-shaped gap (14).

3. Pedal force simulation device according to Claim 2, **characterized in that** the element (11) has, on its wedge-shaped gap (14), a notch-like or stair-like surface (26), while the wedge-shaped element (12) likewise has a notch-like or stair-like surface (27), wherein the notches or steps of the two surfaces interact with one another.

4. Pedal force simulation device according to Claim 2 or 3, **characterized in that** the element (11) has a central bore (26) in which the further energy accumulator (19) is arranged, wherein the energy accumulator is articulated, on the one hand, on the element (11) and, on the other hand, on the wedge-shaped element.

5. Pedal force simulation device according to one of the preceding claims, **characterized in that** the element (11) is connected to the input element (20) in such a way that the second force accumulator is articulated on the input element.

6. Pedal force simulation device according to one of the preceding Claims 2 to 5, **characterized in that** the further energy accumulator (19) is articulated on the input element by means of a retaining element which engages in an end-side loop of the energy accumulator.

7. Pedal force simulation device according to one of the preceding Claims 2 to 6, **characterized in that** the further energy accumulator (19) is articulated on the wedge-shaped element by means of an end-side loop of the force accumulator on an eye of the wedge-shaped element.

8. Pedal force simulation device according to one of the preceding claims, **characterized in that** a housing (2) is provided in which the input element is displaceably arranged, wherein the force accumulator is supported, on the one hand, on the input element and, on the other hand, on the housing.

9. Pedal force simulation device according to one of the preceding claims, **characterized in that** the arms (9, 17, 18) which are supported on the element with the variable contour project from the housing (2).

## Revendications

1. Dispositif de simulation de force de pédalage (1) comprenant un élément d'entrée (3, 20) pouvant être déplacé à l'encontre de la force de rappel d'un accumulateur de force (4), avec un élément (7, 11) de contour variable (8, 13), l'élément (7, 11) étant connecté à l'élément d'entrée (3, 20), des bras (9, 17, 18) s'appuyant contre le contour variable (8, 13) afin d'exercer une force supplémentaire sur l'élément d'entrée (3, 20), **caractérisé en ce que** l'élément de contour variable présente un dispositif de rattrapage de l'usure (10) qui, en cas d'usure, déplace le contour extérieur de l'élément (13) de contour variable dans la direction des bras.

2. Dispositif de simulation de force de pédalage selon la revendication 1, **caractérisé en ce que** l'élément (11) présente une fente en forme de coin (14) entre deux bras (15, 16), le contour variable (13) étant disposé au niveau du côté extérieur des bras (15, 16), et un élément en forme de coin (12) étant prévu, lequel est disposé au moins en partie dans la fente en forme de coin (14), un accumulateur de force supplémentaire (19) étant prévu, lequel sollicite l'élément en forme de coin (12) dans la fente en forme de coin (14).

3. Dispositif de simulation de force de pédalage selon la revendication 2, **caractérisé en ce que** l'élément (11) présente au niveau de sa fente en forme de coin (14) une surface (26) de type cranté ou en gradins, tandis que l'élément en forme de coin (12) présente également une surface de type cranté ou en gradins (27), les crans ou les gradins des deux surfaces coopérant mutuellement.

4. Dispositif de simulation de force de pédalage selon la revendication 2 ou 3, **caractérisé en ce que** l'élément (11) présente un alésage central (26) dans lequel est disposé un accumulateur de force supplémentaire (19), l'accumulateur de force étant articulé d'une part à l'élément (11) et d'autre part à l'élément en forme de coin.

5. Dispositif de simulation de force de pédalage selon l'une quelconque des revendications précédentes, **caractérisé en ce que** l'élément (11) est connecté à l'élément d'entrée (20) de telle sorte que le deuxième accumulateur de force soit articulé à l'élément d'entrée.

6. Dispositif de simulation de force de pédalage selon l'une quelconque des revendications précédentes 2 à 5, **caractérisé en ce que** l'accumulateur de force supplémentaire (19) est articulé à l'élément d'entrée au moyen d'un élément de retenue, l'élément d'entrée s'engageant dans une boucle du côté de l'extrémité de l'accumulateur de force.

7. Dispositif de simulation de force de pédalage selon l'une quelconque des revendications précédentes 2 à 6, **caractérisé en ce que** l'accumulateur de force supplémentaire (19) est articulé au niveau de l'élément en forme de coin, au moyen d'une boucle du côté de l'extrémité de l'accumulateur de force, à un oeillet de l'élément en forme de coin.

8. Dispositif de simulation de force de pédalage selon l'une quelconque des revendications précédentes, **caractérisé en ce qu'**un boîtier (2) est prévu, dans lequel l'élément d'entrée est disposé de manière déplaçable, l'accumulateur de force s'appuyant d'une part contre l'élément d'entrée et d'autre part contre le boîtier.

9. Dispositif de simulation de force de pédalage selon l'une quelconque des revendications précédentes, **caractérisé en ce que** les bras (9, 17, 18) qui s'appuient contre l'élément avec le contour variable font saillie depuis le boîtier (2).
